# EUROPÄISCHE PATENTSCHRIFT

(11) **EP 1 606 536 B1**
(45) Veröffentlichungstag und Bekanntmachung des Hinweises auf die Patenterteilung: **26.07.2006**
(21) Anmeldenummer: 04722170.0
(22) Anmeldetag: 20.03.2004
(51) Int. Cl.: F16H 61/00, F15B 21/04, F16H 59/72

(54) **HYDRAULISCHES SYSTEM**
HYDRAULIC SYSTEM
SYSTEME HYDRAULIQUE

(30) Priorität: 26.03.2003 DE 10313487
(43) Veröffentlichungstag der Anmeldung: 21.12.2005
(73) Patentinhaber: ZF FRIEDRICHSHAFEN AG, 88038 Friedrichshafen (DE)
(72) Erfinder: RIEDHAMMER, Michael, 88697 Bermatingen (DE)
(86) Internationale Anmeldenummer: PCT/EP2004/002947
(87) Internationale Veröffentlichungsnummer: WO 2005/093295

(56) Entgegenhaltungen:
- EP-A- 1 296 065
- DE-A- 19 846 955
- US-A- 6 079 206
- PATENT ABSTRACTS OF JAPAN Bd. 0123, Nr. 25 (M-737), 5. September 1988 (1988-09-05) & JP 63 092804 A (KOMATSU LTD), 23. April 1988 (1988-04-23) -& JP 63 092804 A (KOMATSU LTD) 23. April 1988 (1988-04-23)

## Beschreibung

Die Erfindung bezieht sich auf ein hydraulisches System nach der im Oberbegriff von Anspruch 1 näher definierten Art, wie aus der DE 19 846 955 A1 bekannt.

Bei gattungsgemäßen hydraulischen Systemen wird ein Verbraucher betätigt, indem Druckmittel von einer Druckmittelquelle in einen Kolbenraum des Verbrauchers gefördert und dadurch ein Kolben verschoben wird. Dabei kann es sich beispielsweise um ein sperrbares Differentialgetriebe handeln, bei welchem der Kolben der Betätigungseinrichtung auf eine Lamellenbremse wirkt. Entscheidend für den Fahrkomfort ist hierbei das Ansprechverhalten der Differentialsperre, welche durch die Geschwindigkeit des Kolbens bestimmt wird. Insbesondere bei kalten Außentemperaturen steigt die Viskosität der Druckflüssigkeit, wodurch das Ansprechverhalten des Kolbens und somit die Betätigungsgeschwindigkeit der Differentialsperre deutlich abnimmt, was zu unerwünschten Fahrsituationen führt.

Die DE 198 46 955 A1 offenbart ein unter Last schaltbares Wendegetriebe, bei welchem, um die Kolbenräume zu entlüften, im nicht betätigten Zustand der Betätigungseinrichtung über eine Drosselstelle und ein Rückschlagventil Druckmittel durch den Kolbenraum geführt wird und in das Druckreservoir abfließt. Wird der Kolbenraum mit Druck beaufschlagt, so wird das Rückschlagventil verschlossen und Druckmittel durch eine Zuführung in den Kolbenraum geleitet.

Der vorliegenden Erfindung liegt die Aufgabe zugrunde, ein hydraulisches System zu schaffen, bei welchem die Betätigungseinrichtung auch bei niederen Temperaturen schnell und zuverlässig betätigt werden kann.

Die Aufgabe wird mit einem, auch die kennzeichnenden Merkmale des Hauptanspruchs aufweisenden, gattungsgemäßen hydraulischen System gelöst.

Erfindungsgemäß wird bei dem hydraulischen System Druckmittel von einer Druckmittelquelle aus dem Druckmittelreservoir entnommen und dem Kolbenraum im nicht betätigten Zustand über eine Drosselstelle zugeführt und anschließend wieder zum Druckmittelreservoir abgeleitet. Hierdurch ist gewährleistet, dass permanent ein Druckmittelstrom durch den Verbraucher fließt und somit alle Zuführungen mit Druckmittel befüllt sind, wodurch eine gleichmäßige Betriebsviskosität erreicht wird. Wird der Kolbenraum mit Druck beaufschlagt und somit der Verbraucher betätigt, so erfolgt die Druckbeaufschlagung über mindestens zwei Druckmittelzuführungen, wodurch gewährleistet ist, dass die Druckbeaufschlagung und die Bewegung des Kolbens sehr schnell erfolgen können. Vorzugsweise wird dies über eine erste Druckmittelzuführung, welche mit einem 3/2-Wegeventil mit der Druckmittelquelle verbunden ist und über eine zweite Zuführung, welche permanent mit der Druckmittelquelle verbunden ist, erreicht. Enthält das hydraulische System mehrere Verbraucher, welche mit unterschiedlichen Druckniveaus betätigbar sein sollen, so besteht die Möglichkeit, zwischen dem 3/2-Wegeventil und dem Verbraucher ein Druckbegrenzungsventil anzuordnen, wodurch gewährleistet ist, dass der Verbraucher ein definiertes Druckniveau nicht überschreitet. Dieses Druckbegrenzungsventil kann stufenlos veränderbar sein, um beispielsweise bei einem Differential einen definierten Rutschzustand der Sperrkupplung einzustellen.

Durch das erfindungsgemäße hydraulische System ist gewährleistet, dass der Kolben des Verbrauchers, unabhängig von den Außentemperaturen, gleichbleibend schnell betätigt werden kann. Ein zusätzlicher Vorteil des Systems liegt darin, dass das System einfach aufgebaut ist und eine geringe Anzahl von Teilen und Ventilen aufweist.

Weitere Merkmale sind der Figuren-Beschreibung zu entnehmen.

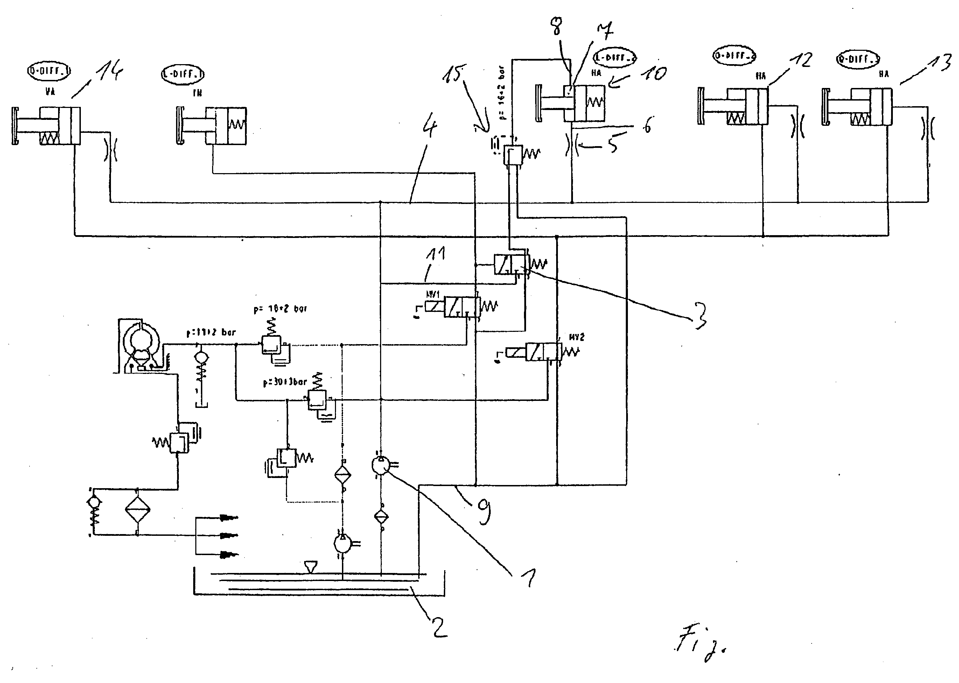

Die einzige Figur zeigt ein hydraulisches System, bei welchem eine Druckmittelquelle 1 Druckmittel aus einem Druckmittelreservoir 2 entnimmt und einerseits zu einem 3/2-Wegeventil 3 und andererseits zu einer Leitung 4 fördert. Befindet sich das 3/2-Wegeventil 3 in seinem Ausgangszustand, so gelangt Druckmittel über die Leitung 4 zur Drosselstelle 5 und von dort in eine zweite Druckmittelzuführung 6 und von dort in den Kolbenraum 7, aus welchem das Druckmittel über die erste Druckmittelzuführung 8 wieder zum 3/2-Wegeventil 3 und von dort über die Leitung 9 in das Druckmittelreservoir 2 zurückfließen kann. Dadurch ist gewährleistet, dass permanent bei nicht betätigtem Verbraucher 10 Druckmittel von der Druckmittelquelle 1 über den Kolbenraum 7 und von dort zurück in das Druckmittelreservoir 2 gelangt. Wird das 3/2-Wegeventil 3 umgesteuert, so gelangt Druckmittel über die Leitung 11 zur ersten Druckmittelzuführung 8 und von dort in den Kolbenraum 7 und gleichzeitig Druckmittel über die Drosselstelle 5 und die zweite Druckmittelzuführung 6 in den Kolbenraum 7, wodurch der Verbraucher 10 schnell und sicher betätigt wird. Die Verbraucher 12, 13 und 14 werden in analoger Weise angesteuert. Um die Verbraucher mit unterschiedlichen Druckniveaus beaufschlagen zu können, ist ein Druckbegrenzungsventil 15 zwischen dem 3/2-Wegeventil 3 und der ersten Druckmittelzuführung 8 angeordnet. Je nach Einstellung kann der Druck im Kolbenraum 7 angesteuert werden. Es besteht die Möglichkeit, auch die Verbraucher 12, 13 und 14 mit entsprechenden Druckbegrenzungsventilen auszurüsten.

### Bezugszeichen

- 1: Druckmittelquelle
- 2: Druckmittelreservoir
- 3: 3/2-Wegeventil
- 4: Leitung
- 5: Drosselstelle
- 6: zweite Druckmittelzuführung
- 7: Kolbenraum
- 8: erste Druckmittelzuführung
- 9: Leitung
- 10: Verbraucher
- 11: Leitung
- 12: Verbraucher
- 13: Verbraucher
- 14: Verbraucher
- 15: Druckbegrenzungsventil

## Patentansprüche

1. Hydraulisches System, bei welchem Druckmittel von einer Druckmittelquelle (1) aus einem Druckmittelreservoir (2) zu mindestens einem Verbraucher (10, 12, 13, 14) mit einem Kolbenraum (7) und mindestens zwei Druckmittelzuführungen (6, 8) gefördert wird, wobei im nicht betätigten Zustand des Verbrauchers (10, 12, 13, 14) die erste Druckmittelzuführung (8) mit dem Druckmittelreservoir (2) und die zweite Druckmittelzuführung (6) mit der Druckmittelquelle (1) verbunden ist, **dadurch gekennzeichnet, dass** im betätigten Zustand des Verbrauchers (10, 12, 13, 14) die erste und die zweite Druckmittelzuführung (6, 8) mit der Druckmittelquelle (1) verbunden sind und ein identisches Druckniveau aufweisen.

2. Hydraulisches System nach Anspruch 1, **dadurch gekennzeichnet, dass** die erste Druckmittelzuführung (8) über ein 3/2-Wegeventil (3) entweder mit der Druckmittelquelle (1) oder mit dem Druckmittelreservoir (2) verbindbar ist.

3. Hydraulisches System nach Anspruch 1, **dadurch gekennzeichnet, dass** die zweite Druckmittelzuführung (6) über eine Drosselstelle (5) mit der Druckmittelquelle (1) verbunden ist.

4. Hydraulisches System nach Anspruch 2, **dadurch gekennzeichnet, dass** zwischen dem 3/2-Wegeventil (3) und der ersten Druckmittelzuführung (8) ein Druckbegrenzungsventil (15) angeordnet ist.

## Claims

1. Hydraulic system, in which pressure medium is delivered by a pressure medium source (1) from a pressure medium reservoir (2) to at least one consumer (10, 12, 13, 14) with a piston chamber (7) and at least two pressure medium supply lines (6, 8), wherein the first pressure medium supply line (8) is connected to the pressure medium reservoir (2) and the second pressure medium supply line (6) is connected to the pressure medium source (1) when the consumer (10, 12, 13, 14) is in the non-operated state, **characterised in that** the first and the second pressure medium supply line (6, 8) are connected to the pressure medium source (1) and are at an identical pressure level when the consumer (10, 12, 13, 14) is in the operated state.

2. Hydraulic system according to Claim 1, **characterised in that** the first pressure medium supply line (8) can be connected via a 3/2-way valve (3) either to the pressure medium source (1) or to the pressure medium reservoir (2).

3. Hydraulic system according to Claim 1, **characterised in that** the second pressure medium supply line (6) is connected via a throttling point (5) to the pressure medium source (1).

4. Hydraulic system according to Claim 2, **characterised in that** a pressure limiting valve (15) is disposed between the 3/2-way valve (3) and the first pressure medium supply line (8).

## Revendications

1. Système hydraulique dans lequel du fluide sous pression est propulsé par une source (1) de fluide sous pression à partir d'un réservoir (2) de fluide sous pression vers au moins un consommateur (10, 12, 13, 14) avec une chambre de piston (7) et au moins deux conduites d'alimentation (6, 8) en fluide sous pression, la première conduite d'alimentation (8) en fluide sous pression étant reliée au réservoir (2) de fluide sous pression et la deuxième conduite d'alimentation (6) en fluide sous pression étant reliée à la source (1) de fluide sous pression à l'état non actionné du consommateur (10, 12, 13, 14), **caractérisé en ce que** la première et la deuxième conduite d'alimentation (6, 8) en fluide sous pression sont reliées à la source (1) de fluide sous pression et présentent un niveau de pression identique à l'état non actionné du consommateur (10, 12, 13, 14).

2. Système hydraulique selon la revendication 1, **caractérisé en ce que** la première conduite d'alimentation (8) en fluide sous pression peut être reliée soit à la source (1) de fluide sous pression soit au réservoir (2) de fluide sous pression par une vanne à 3/2 voies (3).

3. Système hydraulique selon la revendication 1, **caractérisé en ce que** la deuxième conduite d'alimentation (6) en fluide sous pression est reliée à la source (1) de fluide sous pression en passant par un point d'étranglement (5).

4. Système hydraulique selon la revendication 2, **caractérisé en ce qu'**une soupape de limitation de pression (15) est disposée entre la vanne à 3/2 voies (3) et la première conduite d'alimentation (8) en fluide sous pression.
